(19) Europäisches Patentamt
European Patent Office
Office européen des brevets

(11) EP 1 266 864 A1

(12) EUROPÄISCHE PATENTANMELDUNG

(43) Veröffentlichungstag:
**18.12.2002 Patentblatt 2002/51**

(21) Anmeldenummer: **02006055.4**

(22) Anmeldetag: **19.04.2002**

(51) Int Cl.[7]: **C01B 33/12**, B01J 21/08, B01J 35/10, C08K 3/36, C09K 3/14, C03C 3/06, C01B 13/20, B01J 19/26, B01J 12/02

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **17.05.2001 DE 10123950**

(71) Anmelder: **Degussa AG**
**40474 Düsseldorf (DE)**

(72) Erfinder:
- **Meyer, Jürgen, Dr.**
  **63811 Stockstadt (DE)**
- **Mangold, Helmut, Dr.**
  **63517 Rodenbach (DE)**
- **Neugebauer, Peter, Dr.**
  **63071 Offenbach (DE)**

(54) **Granulate auf Basis von mittels Aerosol mit Aluminiumoxid dotiertem, pyrogen hergestelltem Siliziumdioxid, Verfahren zu ihrer Herstellung und ihre Verwendung**

(57) Granulate auf Basis von mittels Aerosol mit Aluminiumoxid dotiertem, pyrogen hergestelltem Siliziumdioxid mit den Kenndaten:

| | |
|---|---|
| Mittlerer Korndurchmesser | 10 bis 150 µm |
| BET-Oberfläche | 25 bis 100 $m^2/g$ |
| pH-Wert | 3 bis 6 |
| Stampfdichte | 400 bis 1.200 g/l |

Sie werden hergestellt, indem man mittels Aerosol mit Aluminiumoxid dotiertes, pyrogen hergestelltes Siliziumdioxid in Wasser dispergiert, sprühtrocknet, gegebenenfalls tempert und/oder silanisiert.

In der silanisierten Form haben die Granulate die folgenden Kenndaten:

| | |
|---|---|
| Mittlerer Korndurchmesser | 10 bis 160 µm |
| BET-Oberfläche | 15 bis 100 $m^2/g$ |
| pH-Wert | 3,0 bis 9,0 |
| Stampfdichte | 400 bis 1.200 g/l |
| Kohlenstoffgehalt | 0,3 bis 12,0 Gew.-% |

Die Granulate werden u. a. als Katalysator und Katalysatorträger in Kosmetika, in Sonnenschutzformulierungen, in Silikonkautschuk, in Tonerpulver, in Lacken und Farben, als Schleif- und Poliermittel, als Rohstoff für die Glas- und Keramikherstellung eingesetzt.

EP 1 266 864 A1

## Beschreibung

Die Erfindung betrifft Granulate auf Basis von mittels Aerosol mit Aluminiumoxid dotiertem, pyrogen hergestelltem Siliziumdioxid, das Verfahren zu ihrer Herstellung und ihre Verwendung.

Es ist bekannt, pyrogenes Siliziumdioxid mittels Hochtemperatur oder Flammenhydrolyse aus $SiCl_4$ herzustellen (Ullmanns Enzyklopädie der technischen Chemie, 4. Auflage, Band 21, Seite 464 (1982)).

Pyrogene Siliziumdioxide zeichnen sich durch extreme Feinteiligkeit, hohe spezifische Oberfläche (BET), sehr hohe Reinheit, sphärische Teilchenform und das Fehlen von Poren aus. Aufgrund dieser Eigenschaften finden pyrogen hergestellte Siliziumdioxide zunehmend Interesse als Träger für Katalysatoren (Dr. Koth et al., Chem. Ing. Techn. 52, 628 (1980). Für diese Verwendung wird das pyrogen hergestellte Siliziumdioxid auf mechanischem Wege mittels zum Beispiel Tablettiermaschinen verformt.

Aus dem Dokument EP 0 995 718 A1 ist ein mittels Aerosol mit Aluminiumoxid dotiertes, pyrogen hergestelltes Siliziumdioxid in Pulverform bekannt. Für die Anwendung als Katalysatorträger dieses Siliziumdioxides bestand die Aufgabe eine geeignete Granulatform zu finden.

Es bestand somit die Aufgabe, Sprühgranulate von mittels Aerosol mit Aluminiumoxid dotiertem, pyrogen hergestelltem Siliziumdioxid, die als Katalysatorträger eingesetzt werden können, zu entwickeln.

Gegenstand der Erfindung sind Granulate auf Basis von mittels Aerosol mit Aluminiumoxid dotiertem, pyrogen hergestelltem Siliziumdioxid mit den folgenden physikalisch-chemischen Kenndaten:

| | |
|---|---|
| Mittlerer Korndurchmesser | 10 bis 150 µm |
| BET-Oberfläche | 25 bis 100 m2/g |
| pH-Wert | 3 bis 6 |
| Stampfdichte | 400 bis 1.200 g/l |

In einer bevorzugten Ausführungsform der Erfindung kann das Granulat die folgenden physikalisch-chemischen Kenndaten aufweisen:

| | |
|---|---|
| Mittlerer Korndurchmesser | 15 bis 30 µm |
| BET-Oberfläche | 60 bis 70 m2/g |
| pH-Wert | 4 bis 6 |
| Stampfdichte | 400 bis 650 g/l |

Das erfindungsgemäße Granulat kann hergestellt werden, indem man mittels Aerosol mit Aluminiumoxid dotiertes, pyrogen hergestelltes Siliziumdioxid in Wasser dispergiert, sprühtrocknet und gegebenenfalls die erhaltenen Granulate bei einer Temperatur von 150 bis
1.100 °C während eines Zeitraumes von 1 bis 8 h tempert.

Das mittels Aerosol mit Aluminiumoxid dotierte, pyrogen hergestellte Siliziumdioxid kann ein mittels Aerosol mit Aluminiumoxid dotiertes, pyrogen hergestelltes Siliziumdioxid sein, bei dem die Basiskomponente ein pyrogen nach Art der Flammenoxidation oder bevorzugt der Flammenhydrolyse hergestelltes Siliziumdioxid ist, das mit einer Dotierungskomponente von $1 \cdot 10^{-4}$ und bis 20 Gew.-% dotiert ist, wobei die Dotierungsmenge vorzugsweise im Bereich von 1 bis 10.000 ppm liegt und die Dotierungskomponente ein Salz oder eine Salzmischung des Aluminiums oder eine Suspension einer Aluminiumverbindung oder metallischen Aluminiums oder Mischungen davon ist, wobei die BET-Oberfläche des dotierten Oxides zwischen 5 und 600 $m^2/g$, bevorzugt im Bereich zwischen 40 und 100 $m^2/g$, liegt.

Das erfindungsgemäße Siliziumdioxid kann eine DBP-Zahl von unter 100g/100g aufweisen.

Das mittels Aerosol mit Aluminiumoxid dotierte, pyrogen hergestellte Siliziumdioxid kann hergestellt werden, indem man in eine Flamme, wie sie zur pyrogenen Herstellung von Siliziumdioxid nach der Art der Flammenoxidation oder bevorzugt der Flammenhydrolyse benutzt wird, ein Aerosol einspeist, das Aerosol vor der Reaktion mit dem Gasgemisch der Flammenoxidation beziehungsweise Flammenhydrolyse homogen mischt, dann das Aerosol-Gasgemisch in der Flamme abreagieren läßt und das entstandene mit Aluminiumoxid dotierte pyrogen hergestellte Siliziumdioxid in bekannter Weise vom Gasstrom abtrennt, wobei zur Herstellung des Aerosols eine wäßrige Lösung dient, die Salze oder Salzmischungen des Aluminiums oder das Metall selbst in gelöster oder suspendierter Form oder Mischungen davon enthält, wobei das Aerosol durch Vernebelung mittels einer Zweistoffdüse oder durch eine andere Art der Aerosolherstellung, vorzugsweise durch einen Aerosolgenerator nach der Ultraschallvernebelung, hergestellt wird.

Als Salze können eingesetzt werden: AlCl3, Al2(SO4)3, Al(NO3)3.
Die Verfahren der Flammenhydrolyse zur Herstellung von pyrogenen Oxiden so auch zur Herstellung von Siliziumdioxid (Kieselsäure) sind aus Ullmanns Enzyklopädie der technischen Chemie, 4. Auflage, Band 21, Seite 464 bekannt.
Ein weiterer Gegenstand der Erfindung sind Granulate auf Basis von mittels Aerosol mit Aluminiumoxid dotiertem, pyrogen hergestelltem Siliziumdioxid mit den folgenden physikalisch-chemischen Kenndaten:

| | |
|---|---|
| Mittlerer Korndurchmesser | 10 bis 160 µm |
| BET-Oberfläche | 15 bis 100 $m^2/g$ |
| pH-Wert | 3,0 bis 9,0 |
| Stampfdichte | 400 bis 1.200 g/l |
| Kohlenstoffgehalt | 0,3 bis 12,0 Gew.-% |

Das erfindungsgemäße Granulat kann hergestellt werden, indem man mittels Aerosol mit Aluminiumoxid dotiertes, pyrogen hergestelltes Siliziumdioxid in Wasser dispergiert, sprühtrocknet und gegebenenfalls die erhaltenen Granulate bei einer Temperatur von 150 bis 1.000 °C während eines Zeitraumes von 1 bis 8 h tempert und anschliessend silanisiert.
Zur Silanisierung können Halogensilane, Alkoxysilane, Silazane und/oder Siloxane eingesetzt werden.
Insbesondere können als Halogensilane die folgenden Stoffe eingesetzt werden:

a) Organosilane des Types $(RO)_3Si(C_nH_{2n+1})$ und $(RO)_3Si(C_nH_{2n-1})$

R = Alkyl, wie zum Beispiel Methyl-, Ethyl-, n-Propyl-, i-Propyl-, Butyl-
n = 1 - 20

b) Organosilane des Types $R'_x(RO)_ySi(C_nH_{2n+1})$ und

$R'_x (RO)_ySi(C_nH_{2n-1})$
R = Alkyl, wie zum Beispiel Methyl-, Ethyl-, n-Propyl-, i-Propyl-, Butyl-
R' = Alkyl, wie zum Beispiel Methyl-, Ethyl-, n-Propyl-, i-Propyl-, Butyl-
R'=Cycloalkyl
n = 1 - 20
x+y = 3
x = 1,2
y = 1,2

c) Halogenorganosilane des Types $X_3Si(C_nH_{2n+1})$ und

$X_3Si(C_nH_{2n-1})$
X = Cl, Br
n = 1 - 20

d) Halogenorganosilane des Types $X_2(R')Si(C_nH_{2n+1})$ und

$X_2(R')Si(C_nH_{2n-1})$
X = Cl, Br
R' = Alkyl, wie zum Beispiel Methyl-, Ethyl-, n-Propyl-, i-Propyl-, Butyl-
R'=Cycloalkyl
n = 1 - 20

e) Halogenorganosilane des Types $X(R')_2Si(C_nH_{2n+1})$ und

$X(R')_2Si(C_nH_{2n-1})$
X = Cl, Br
R' = Alkyl, wie zum Beispiel Methyl-, Ethyl-,
R'=Cycloalkyl

n-Propyl-, i-Propyl-, Butyl-
n = 1 - 20

f) Organosilane des Types $(RO)_3Si(CH_2)_m$-R'

R = Alkyl, wie Methyl-, Ethyl-, Propyl-
m = 0,1 - 20
R' = Methyl-, Aryl (zum Beispiel $-C_6H_5$, substituierte Phenylreste)

$-C_4F_9$, $OCF_2$-CHF-$CF_3$, $-C_6F_{13}$, -O-$CF_2$-$CHF_2$
$-NH_2$, $-N_3$, -SCN, -CH=$CH_2$, -NH-$CH_2$-$CH_2$-$NH_2$,
-N-($CH_2$-$CH_2$-$NH_2)_2$
-OOC($CH_3$)C = $CH_2$
-$OCH_2$-CH(O)$CH_2$
-NH-CO-N-CO-$(CH_2)_5$
-NH-COO-$CH_3$, -NH-COO-$CH_2$-$CH_3$, -NH-$(CH_2)_3Si(OR)_3$
-$S_x$-$(CH_2)_3Si(OR)_3$
-SH
-NR'R"R"' (R' = Alkyl, Aryl; R" = H, Alkyl, Aryl; R"' = H, Alkyl, Aryl, Benzyl, $C_2H_4$NR"" R' ' ' ' ' mit R"" = H, Alkyl und R""' = H, Alkyl)

g) Organosilane des Typs $(R")_x(RO)_ySi(CH_2)_m$-R'

R" = Alkyl x+y = 2 = Cycloalkyl x = 1,2 y = 1,2 m = 0,1 bis 20
R' = Methyl-, Aryl (zum Beispiel $-C_6H_5$ ,substituierte Phenylreste)

$-C_4F_9$, -$OCF_2$-CHF-$CF_3$, $-C_6F_{13}$, -O-$CF_2$-$CHF_2$
$-NH_2$, $-N_3$, -SCN, -CH=$CH_2$, -NH-$CH_2$-$CH_2$-$NH_2$,
-N-($CH_2$-$CH_2$-$NH_2)_2$
-OOC($CH_3$)C = $CH_2$
-$OCH_2$-CH(O)$CH_2$
-NH-CO-N-CO-$(CH_2)_5$
-NH-COO-$CH_3$, -NH-COO-$CH_2$-$CH_3$, -NH-$(CH_2)_3Si(OR)_3$
-$S_x$-$(CH_2)_3Si(OR)_3$
-SH - NR'R"R"' (R' = Alkyl, Aryl; R" = H, Alkyl, Aryl; R"' = H, Alkyl, Aryl, Benzyl, $C_2H_4$NR"" R""' mit R' ' ' ' = H, Alkyl und R' ' ' ' ' = H, Alkyl)

h) Halogenorganosilane des Types $X_3Si(CH_2)_m$-R'

X = Cl, Br
m = 0,1 - 20
R' = Methyl-, Aryl (zum Beispiel $-C_6H_5$, substituierte Pheneylreste)

$-C_4F_9$, -$OCF_2$-CHF-$CF_3$, $-C_6F_{13}$, -O-$CF_2$-$CHF_2$
$-NH_2$, $-N_3$, -SCN, -CH=$CH_2$,
-NH-$CH_2$-$CH_2$-$NH_2$
-N-($CH_2$-$CH_2$-$NH_2)_2$
-OOC($CH_3$)C = $CH_2$
-$OCH_2$-CH(O)$CH_2$
-NH-CO-N-CO-$(CH_2)_5$
-NH-COO-$CH_3$, -NH-COO-$CH_2$-$CH_3$, -NH-$(CH_2)_3Si(OR)_3$
-$S_x$-$(CH_2)_3Si(OR)_3$
-SH

i) Halogenorganosilane des Types $(R)X_2Si(CH_2)_m$-R'

X = Cl, Br
R = Alkyl, wie Methyl,- Ethyl-, Propyl-

m = 0,1 - 20
R' = Methyl-, Aryl (z.B. $-C_6H_5$, substituierte Phenylreste)

$-C_4F_9$, $-OCF_2-CHF-CF_3$, $-C_6F_{13}$, $-O-CF_2-CHF_2$
$-NH_2$, $-N_3$, -SCN, $-CH=CH_2$,$-NH-CH_2-CH_2-NH_2$,
$-N-(CH_2-CH_2-NH_2)_2$
$-OOC(CH_3)C = CH_2$
$-OCH_2-CH(O)CH_2$
$-NH-CO-N-CO-(CH_2)_5$
$-NH-COO-CH_3$, $-NH-COO-CH_2-CH_3$, $-NH-(CH_2)_3Si(OR)_3$, wobei R = Methyl-, Ethyl-, Propyl-, Butyl- sein kann
$-S_x-(CH_2)_3Si(OR)_3$, wobei R = Methyl-, Ethyl-, Propyl-, Butyl- sein kann -SH

(j) Halogenorganosilane des Types $(R)_2X\ Si(CH_2)_m-R'$

X = Cl, Br
R = Alkyl
m = 0,1 - 20
R' = Methyl-, Aryl (z.B. $-C_6H_5$, substituierte Phenylreste)

$-C_4F_9$, $-OCF_2-CHF-CF_3$, $-C_6F_{13}$, $-O-CF_2-CHF_2$
$-NH_2$, $-N_3$, -SCN, $-CH=CH_2$, $-NH-CH_2-CH_2-NH_2$,
$-N-(CH_2-CH_2-NH_2)_2$
$-OOC(CH_3)C = CH_2$
$-OCH_2-CH(O)CH_2$
$-NH-CO-N-CO-(CH_2)_5$
$-NH-COO-CH_3$, $-NH-COO-CH_2-CH_3$, $-NH-(CH_2)_3Si(OR)_3$
$-S_x-(CH_2)_3Si(OR)_3$
-SH

(k) Silazane des Types

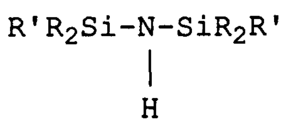

R = Alkyl
R' = Alkyl, Vinyl

(1) Cyclische Polysiloxane des Types D 3, D 4, D 5, wobei unter D 3, D 4 und D 5 cyclische Polysiloxane mit 3,4 oder 5 Einheiten des Typs $-O-Si(CH_3)_2-$ verstanden wird. Z.B. Octamethylcyclotetrasiloxan = D 4

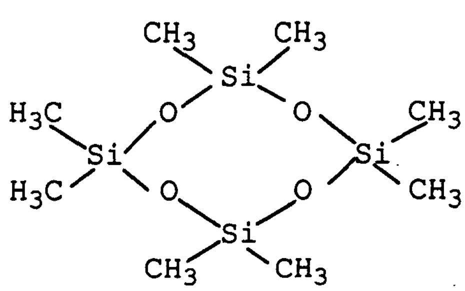

(m) Polysiloxane beziehungsweise Silikonöle des Types

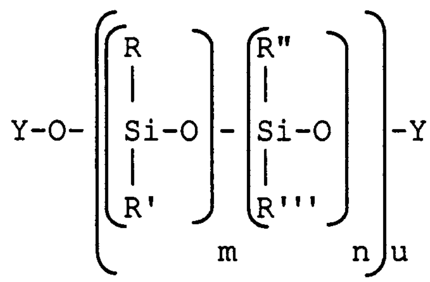

m = 0,1,2,3,...∞
n = 0,1,2,3,...∞
u = 0,1, 2, 3,...∞
$Y=CH_3$, H, $C_nH_{2n+1}$ n=1-20
$Y=Si(CH_3)_3$, $Si(CH_3)_2H$ $Si(CH_3)_2OH$, $Si(CH_3)_2(OCH_3)$ $Si(CH_3)_2(C_nH_{2n+l})$ n=1-20
R = Alkyl, wie $C_nH_{2n+1}$, wobei n = 1 bis 20 ist, Aryl, wie
Phenyl- und substituierte Phenylreste, $(CH_2)_n$-$NH_2$, H R' = Alkyl, wie $C_nH_{2n+1}$, wobei n = 1 bis 20 ist, Aryl, wie Phenyl- und substituierte Phenylreste, $(CH_2)_n$-$NH_2$, H
R'' = Alkyl, wie $C_nH_{2n+1}$, wobei n = 1 bis 20 ist, Aryl, wie Phenyl- und substituierte Phenylreste, $(CH_2)_n$-$NH_2$, H
R''' = Alkyl, wie $C_nH_{2n+1}$, wobei n = 1 bis 20 ist, Aryl, wie Phenyl- und substituierte Phenylreste, $(CH_2)_n$-$NH_2$, H

Die Dispersion in Wasser kann eine Konzentration an mittels Aerosol mit Aluminiumoxid dotiertem, pyrogen hergestelltem Siliziumdioxid von 3 bis 50 Gew.-% aufweisen.

Zur Dispersion können organische Hilfsmittel zugefügt werden, um die Stabilität der Dispersion zu erhöhen und die Teilchenmorphologie nach der Sprühtrocknung zu verbessern.

Beispielsweise können die folgenden Hilfsstoffe eingesetzt werden:

Polyalkohole, Polyether, Tenside auf Fluorkohlenwasserstoffbasis, Alkohole.

Die Sprühtrocknung kann man bei einer Temperatur von 200 bis 600 °C durchführen. Dabei kann man Scheibenzerstäuber oder Düsenzerstäuber einsetzen.

Die Temperung der Granulate kann man sowohl in ruhender Schüttung, wie zum Beispiel in Kammeröfen, als auch in bewegter Schüttung, wie zum Beispiel Drehrohrtrockner, durchführen.

Die Silanisierung kann mit denselben Halogensilanen, Alkoxysilanen, Silazanen und/oder Siloxanen wie oben beschrieben durchgeführt werden, wobei das Silanisierungsmittel gegebenenfalls in einem organischen Lösungsmittel, wie zum Beispiel Ethanol, gelöst sein kann.

Bevorzugt kann man als Silanisierungsmittel das Silan Si 108 $[(CH_3O)_3SiC_8H_{17}]$ Trimethoxyoctylsilan einsetzen.

Die Silanisierung kann man durchführen, indem man das Granulat mit dem Silanisierungsmittel bei Raumtemperatur besprüht und das Gemisch anschließend bei einer Temperatur von 100 bis 400 °C über einen Zeitraum von 1 bis 6 h thermisch behandelt.

Eine alternative Methode der Silanisierung der Granulate kann man durchführen, indem man das Granulat mit dem Silanisierungsmittel in Dampfform behandelt und das Gemisch anschließend bei einer Temperatur von 200 bis 800 °C über einen Zeitraum von 0,5 bis 6 h thermisch behandelt.

Die thermische Behandlung kann unter Schutzgas, wie zum Beispiel Stickstoff, erfolgen.

Die Silanisierung kann man in beheizbaren Mischern und Trocknern mit Sprüheinrichtungen kontinuierlich oder ansatzweise durchführen. Geeignete Vorrichtungen können zum Beispiel sein: Pflugscharmischer, Teller-, Wirbelschichtoder Fließbetttrockner.

Durch die Variation der Einsatzstoffe, der Bedingungen bei der Sprühung, der Temperung und der Silanisierung kann man die physikalisch-chemischen Parameter der Granulate, wie die spezifische Oberfläche, die Korngrößenverteilung, die Stampfdichte, und pH-Wert innerhalb der angegebenen Grenzen verändern.

Das erfindungsgemäße Granulat auf Basis von mittels Aerosol mit Aluminiumoxid dotiertem, pyrogen hergestelltem Siliziumdioxid weist die folgenden Vorteile auf:

Das Fließverhalten und damit die Handhabung und
Verarbeitbarkeit ist wesentlich besser als bei nichtsprühgetrocknetem mittels Aerosol mit Aluminiumoxid dotiertem,

pyrogen hergestelltem Siliziumdioxid.

Das Einarbeiten in organische Systeme ist leichter.
Die Dispergierung ist einfacher.
Für die Granulation sind keine zusätzlichen Hilfsstoffe erforderlich.
Gegenüber dem nichtsprühgetrocknetem mittels Aerosol mit Aluminiumoxid dotiertem, pyrogen hergestelltem Siliziumdioxid, das keine definierte Agglomeratgröße aufweist, hat das erfindungsgemäße Granulat auf Basis von mittels Aerosol mit Aluminiumoxid dotiertem, pyrogen hergestelltem Siliziumdioxid eine definierte Teilchengröße. Das erfindungsgemäße Granulat auf Basis von mittels Aerosol mit Aluminiumoxid dotiertem, pyrogen hergestelltem Siliziumdioxid ermöglicht eine staubfreie Handhabung.
Auf Grund der hohen Stampfdichte ist ein geringerer Verpackungsaufwand für den Transport erforderlich.
Das erfindungsgemäße Granulat auf Basis von mittels Aerosol mit Aluminiumoxid dotiertem, pyrogen hergestelltem Siliziumdioxid kann als Katalysatorträger eingesetzt werden.
Das nichtsprühgetrocknete mittels Aerosol mit Aluminiumoxid dotierte, pyrogen hergestellte Siliziumdioxid ist hierzu nicht geeignet, weil es beispielsweise aus dem Wirbelbett herausgetragen wird.

Die erfindungsgemäßen Granulate können als Katalysatoren und Träger für Katalysatoren, sowie in Kosmetika, als Sonnenschutz, in Silikonkautschuk, in Tonerpulver, in Lacken und Farben, als Schleif- und Poliermittel, als Rohstoff zur Glas- und Keramikherstellung eingesetzt werden.

Die Granulate können auf verschiedene Art und Weise modifiziert werden.

Beispiele für die Modifizierung sind:

- Der Einbau von Kationen, wie zum Beispiel $H^+$, $Cs^+$, Seltenerdmetall- oder Edelmetallkationen.
- Einbau von Metallen oder Metalloxiden durch Umsetzung mit geeigneten Precursormolekülen, wie zum Beispiel $TiCl_4$, $TiBr_4$, $Ti(OEt)_4$, $TiCp_2Cl_2$ (Cp = Cyclpentadienyl), $Mn_2(CO)_{10}$, $Fe(CO)_5$.
- Einbau von Edelmetallen oder Metall-Oxiden durch Imprägnierung mit Lösungen der Metall- oder Edelmetallsalze.

Die erfindungsgemäßen Granulate können als Katalysatoren und Katalysatorträger, beispielsweise für folgende katalytische Umsetzungen eingesetzt werden:

Die Oxifunktionalisierung von Kohlenwasserstoffen, die Oxidation von Olefinen zu Epoxiden mit Wasserstoffperoxid, Alkyl- oder Aryl-Hydroperoxiden, wie zum Beispiel tert. Butylhydroperoxid oder Phenylethylhydroperoxid ($C_6H_5CH_2CH_2OOH$) und/oder Sauerstoff, Aromatenalkylierungen, Hydrierungen, Dehydrierungen, Hydratisierungen, Dehydratisierungen, Isomerisierungen, Additions- und Eliminierungsreaktionen, nukleophile und elektrophile Substitutionsreaktionen, Hydroxilierungen von Aromaten und Heteroaromaten, Epoxid-Aldehyd-Umlagerungen, Amminierungen, Ammoximierungen, Polymerisationsreaktionen, Veresterungsund Veretherungsreaktionen, wie auch katalytische Umsetzungen von Abgasen und Rauchgasen, beziehungsweise Stickoxidentfernung.

Die erfindungsgemäßen Granulate sind außerdem als Träger für Farb-, Geruchs- und Wirkstoffe geeignet.

## Beispiele

Das erfindungsgemäß verwendbare mittels Aerosol mit Aluminiumoxid dotierte, pyrogen hergestellte Siliziumdioxid und das Verfahren zu seiner Herstellung werden anhand der Figur 1 und der folgenden Beispiele näher erläutert und beschrieben:

Figur 1 zeigt eine schematische Darstellung der Dotierungsapparatur. Kernstück der Apparatur ist ein Brenner bekannter Bauart zur Herstellung von pyrogenen Oxiden.

Der Brenner 1 besteht aus dem Zentralrohr 2, das in die Düse 3 mündet, aus welcher der Hauptgasstrom in den Brennerraum strömt und dort abbrennt. Die Düse 3 ist von der Ringdüse 4 umgeben, aus der (Ring oder Sekundär-) Wasserstoff ausströmt.

In dem Zentralrohr 2 befindet sich das Axialrohr 5, das einige Zentimeter vor der Düse des Zentralrohrs 2 endet. In das Axialrohr 5 wird das Aerosol eingespeist.

Das Aerosol, das aus einer wäßrigen Aluminiumchloridlösung besteht, wird in dem Aerosol-Generator 6 (Ultraschallvernebler) erzeugt.

Das in dem Aerosol-Generator 6 erzeugte Aluminiumchlorid-Wasser-Aerosol wird mittels eines leichten Traggasstromes durch die Heizzone 7 geleitet, in der das mitgeführte Wasser verdampft, wobei in der Gasphase kleine Salzkristalle in feinverteilter Form zurückbleiben.

Beispiel 1*Herstellung eines mittels Aerosol mit Aluminiumoxid dotierten, pyrogen hergestellten Siliziumdioxides mit niedriger BET-Oberfläche*

5,25 kg/h $SiCl_4$ werden bei ca. 130 °C verdampft und in das Zentralrohr 2 des Brenners 1 überführt. In das Zentralrohr 2 werden zusätzlich 3,47 $Nm^3/h$ (Primär-) Wasserstoff und 3,76 $Nm^3/h$ Luft eingespeist. Zusätzlich werden in dieses Gemisch 0,95 $Nm^3/h$ Sauerstoff zugegeben.

Das Gasgemisch strömt aus der Düse 3 des Brenners 1 und brennt in den Brennerraum und das daran anschließende wassergekühlte Flammrohr.

In die Ringdüse 4 werden 0,5 $Nm^3/h$ (Mantel oder Sekundär-) Wasserstoff sowie 0,3 $Nm^3/h$ Stickstoff eingespeist.

In den Brennerraum werden noch zusätzlich 20 $Nm^3/h$ (Sekundär-)Luft eingespeist.

Aus dem Axialrohr 5 strömt der zweite Gasstrom in das Zentralrohr 2.

Der zweite Gasstrom besteht aus dem Aerosol, das durch Ultraschallvernebelung von $AlCl_3$-Lösung in dem Aerosolgenerator 6 erzeugt wird. Der Aerosolgenerator 6 vernebelt dabei 460 g/h 2,29-prozentige wäßrige Aluminiumtrichloridlösung. Das Aluminiumchloridaerosol wird mit Hilfe des Traggases von 0,5 $Nm^3/h$ Luft durch die geheizte Leitung geführt, wobei das wäßrige Aerosol bei Temperaturen um ca. 180 °C in ein Gas und ein Salzkristall-Aerosol übergeht.

Am Brennermund beträgt die Temperatur des Gasgemisches ($SiCl_4$-Luft-Wasserstoff, Wasser-Aerosol) 156 °C.

Die Reaktionsgase und die mittels Aerosol mit Aluminiumoxid dotierte pyrogene Kieselsäure werden durch Anlegen eines Unterdruckes durch das Kühlsystem gesaugt. Dabei wird der Partikel-Gasstrom auf ca. 100 bis 160 °C abgekühlt. In einem Zyklon wird der Feststoff von dem Abgasstrom abgetrennt.

Das mittels Aerosol mit Aluminiumoxid dotierte, pyrogen hergestellte Siliziumdioxid fällt als weißes feinteiliges Pulver an.

In einem weiteren Schritt werden bei erhöhter Temperatur durch Behandlung mit wasserdampfhaltiger Luft noch anhaftende Salzsäurereste von der Kieselsäure entfernt.

Die BET-Oberfläche der mit Aluminiumoxid dotierten pyrogenen Kieselsäure beträgt 55 $m^2/g$.

Die Herstellbedingungen sind in Tabelle 1 zusammengefaßt. Weitere analytische Daten des erfindungsgemäß verwendbaren Siliziumdioxides werden in Tabelle 2 angegeben.

Beispiel 2 *Herstellung eines mittels Aerosol mit Aluminiumoxid dotierten, pyrogen hergestellten Siliziumdioxides mit hoher BET-Oberfläche*

4,44 kg/h $SiCl_4$ werden bei ca. 130 °C verdampft und in das Zentralrohr 2 des Brenners 1 bekannter Bauart überführt. In das Zentralrohr 2 werden zusätzlich 3,15 $Nm^3/h$ (Primär-) Wasserstoff und 8,2 $Nm^3/h$ Luft eingespeist.

Das Gasgemisch strömt aus der Düse 3 des Brenners 1 und brennt in den Brennerraum und das daran anschließende wassergekühlte Flammrohr.

In die Ringdüse 4 werden 0,5 $Nm^3/h$ (Mantel oder Sekundär-) Wasserstoff und 0,3 $Nm^3/h$ Stickstoff eingespeist.

In den Brennerraum werden noch zusätzlich 12 $Nm^3/h$ (Sekundär-)Luft eingespeist.

Aus dem Axialrohr 5 strömt der zweite Gasstrom in das Zentralrohr 2.

Der zweite Gasstrom besteht aus dem Aerosol, das durch Ultraschallvernebelung von $AlCl_3$-Lösung in der separaten Vernebelungseinheit 6 erzeugt wird. Der Aerosolgenerator 6 vernebelt dabei 450 g/h 2,29-prozentige wäßrige Aluminiumtrichloridlösung. Das Aluminiumchloridaerosol wird mit Hilfe des Traggases von 0,5 $Nm^3/h$ Luft durch die geheizte Leitung geführt, wobei das wäßrige Aerosol bei Temperaturen um ca. 180 °C in ein Gas und ein Salzkristall-Aerosol übergeht.

Am Brennermund beträgt die Temperatur des Gasgemisches ($SiCl_4$-Luft-Wasserstoff, Wasser-Aerosol) 180 °C.

Die Reaktionsgase und das mittels Aerosol mit Aluminiumoxid dotierte, pyrogen hergestellte Siliziumdioxid werden durch Anlegen eines Unterdruckes durch ein Kühlsystem gesaugt. Dabei wird der Partikel-Gasstrom auf ca. 100 bis 160 °C abgekühlt. In einem Zyklon wird der Feststoff von dem Abgasstrom abgetrennt.

Das mittels Aerosol mit Aluminiumoxid dotierte, pyrogen hergestellte Siliziumdioxid fällt als weißes feinteiliges Pulver an. In einem weiteren Schritt werden bei erhöhter Temperatur durch Behandlung mit wasserdampfhaltiger Luft noch anhaftende Salzsäurereste von der Kieselsäure entfernt.

Die BET-Oberfläche des mittels Aerosol mit Aluminiumoxid dotierten, pyrogenen hergestellten Siliziumdioxides beträgt 203 $m^2/g$.

Die Herstellbedingungen sind in Tabelle 1 aufgeführt. Weitere analytische Daten des erfindungsgemäß verwendbaren Siliziumdioxides werden in Tabelle 2 angegeben.

| Nr. | $SiCl_4$ kg/h | Primär-luft $Nm^3/h$ | $O_2$ Kern $Nm^3/h$ | Sek-Luft $Nm^3/h$ | $H_2$ Kern $Nm^3/h$ | $H_2$ Mantel $Nm^3/h$ | $N_2$ Mantel $Nm^3/h$ | Gas-Temp °C | Salz-lösung | Aerosol menge kg/h | Luft Aeros. $Nm^3/h$ | BET $m^2/g$ |
|---|---|---|---|---|---|---|---|---|---|---|---|---|
| 1 | 5,25 | 3,76 | 0,95 | 20 | 3,47 | 0,5 | 0,3 | 156 | 2,29% wäßrige $AlCl_3$ | 0,46 | 0,5 | 55 |
| 2 | 4,44 | 8,2 | 0 | 12 | 3,15 | 0,5 | 0,3 | 180 | 2,29% wäßrige $AlCl_3$ | 0,45 | 0,5 | 203 |

Erläuterung: Primärluft = Luftmenge im Zentralrohr; Sek-Luft= Sekundärluft; $H_2$-Kern = Wasserstoff im Zentralrohr; Gas-Temp. = Gastemperatur an der Düse des Zentralrohres; Aerosolmenge = Massenstrom der in Aerosolform überführten Salzlösung; Luft-Aerosol = Traggasmenge (Luft) des Aerosols;

Tabelle 2

Analytische Daten der nach Beispiel 1 bis 2 erhaltenen Proben

| | BET $m^2/g$ | pH-Wert 4-%Sus | Stampf-dichte g/l | DBP-Absorption g/100g | $Al_2O_3$-Gehalt Gew.% | $SiO_2$-Gehalt Gew.% | Clorid-gehalt ppm | | |
|---|---|---|---|---|---|---|---|---|---|
| Beispiel Nr. 1 | 55 | 4,39 | 94 | 81 | 0,187 | 99,79 | 89 | | |
| Beispiel Nr. 2 | 203 | 4,15 | 24 | 326 | 0,27 | 99,67 | | | |
| Dazu im Vergleich | | | | | | | | | |
| Aerosil OX 50 | 50 | 3,8 bis 4,8 | 130 | ca. 160 | <0,08 | >99,8 | <250 | | |

Erläuterung: pH 4% Sus. = pH-Wert der vierprozentigen wäßrigen Suspension

Die physikalisch-chemischen Kenndaten werden mit den folgenden Meßmethoden bestimmt:
Die BET-Oberfläche wird gemäß DIN 66 131 mit Stickstoff bestimmt.
Bestimmung der Stampfdichte in Anlehnung an DIN ISO 787/XI

Grundlagen der Stampfdichtebestimmung

Die Stampfdichte (früher Stampfvolumen) ist gleich dem Quotienten aus der Masse und dem Volumen eines Pulvers nach dem Stampfen im Stampfvolumeter unter festgelegten Bedingungen. Nach DIN ISO 787/XI wird die Stampfdichte in $g/cm^3$ angegeben. Wegen der sehr niedrigen Stampfdichte der pyrogenen Oxide wird jedoch von uns der Wert in g/l angegeben. Ferner wird auf die Trocknung und Siebung sowie auf die Wiederholung des Stampfvorganges verzichtet.

Geräte zur Stampfdichtebestimmung

Stampfvolumeter

Meßzylinder, 250 ml
Laborwaage (Ablesbarkeit 0.01 g)

Durchführung der Stampfdichtebestimmung

200 ± 10 ml Granulat werden in den Meßzylinder des Stampfvolumeters so eingefüllt, daß keine Hohlräume verbleiben und die Oberfläche waagerecht ist.
Die Masse der eingefüllten Probe wird auf 0,01 g genau bestimmt. Der Meßzylinder mit der Probe wird in den Meßzylinderhalter des Stampfvolumeters eingesetzt und 1250 mal gestampft.
Das Volumen des gestampften pyrogenen Oxids wird auf 1 ml genau abgelesen.

Auswertung der Stampfdichtebestimmung

$$\text{Stampdichte (g/l)} = \frac{\text{g Einwaage x 1000}}{\text{ml abgelesenes Volumen}}$$

Der pH-Wert wird in 4 %iger wäßriger Dispersion bestimmt, bei hydrophoben Granulaten in Wasser: Methanol 1:1.

Reagenzien zur pH-Wert-Bestimmung

destilliertes oder vollentsalztes Wasser, pH > 5.5 Methanol, p.a. Pufferlösungen pH 7.00 pH 4.66

Geräte zur pH-Wert-Bestimmung

Laborwaage, (Ablesbarkeit 0,1 g)
Becherglas, 250 ml
Magnetrührer
Magnetstab, Länge 4 cm
kombinierte pH-Elektrode
pH-Meßgerät
Dispensette, 100 ml

Arbeitsvorschrift zur Bestimmung des pH-Wertes

Die Bestimmung erfolgt in Anlehnung an DIN/ISO 787/IX:

Eichung: Vor der pH-Wertmessung wird das Meßgerät mit den Pufferlösungen geeicht. Werden mehrere Messungen hintereinander durchgeführt, genügt eine einmalige Eichung.

4 g hydrophobes Granulat werden in einem 250 ml Becherglas mit 48 g (61 ml) Methanol angeteigt und die Suspension mit 48 g (48 ml) Wasser verdünnt und fünf Minuten bei eingetauchter pH-Elektrode mit einem Magnetrührer gerührt (Drehzahl ca. 1000 $min^{-1}$).
Nach Abstellen des Rührers wird der pH-Wert nach einer Standzeit von einer Minute abgelesen. Das Ergebnis wird mit einer Dezimale ausgewiesen.

Bestimmung des Trockenverlustes

Im Gegensatz zur in der DIN ISO 787 II genannten Einwaage von 10 g wird für die Trocknungsverlust-Bestimmung eine 1 g-Einwaage verwendet.
Der Deckel wird vor dem Abkühlen aufgesetzt. Eine zweite Trocknung wird nicht vorgenommen.
Ca. 1 g der Probe wird unter Vermeidung von Staubentwicklung in ein bei 105 °C getrocknetes Wägeschälchen mit Schliffdeckel auf 0,1 mg genau eingewogen und zwei Stunden im Trockenschrank bei 105 °C getrocknet. Nach dem Erkalten bei aufgesetztem Deckel im Exsikkator über Blaugel wird zurückgewogen.

$$\%\ \text{Trocknungsverlust bei } 105\ ^\circ\text{C} = \frac{\text{g Gewichtsverlust}}{\text{g Einwaage}} \times 100$$

Das Ergebnis wird mit einer Dezimale ausgewiesen.

Bestimmung des Glühverlustes (2 h bei 1000 Cel, bezogen auf die getrocknete Substanz (2 h bei 105 Cel)

Grundlagen zur Bestimmung des Glühverlustes

Die Bestimmung des Glühverlustes erfolgt bei 1000 °C. Bei dieser Temperatur entweicht neben dem physikalisch gebundenen Wasser auch das chemisch gebundene Wasser.

Geräte zur Bestimmung des Glühverlustes

Porzellantiegel mit Tiegeldeckel

Muffelofen
Analysenwaage (Ablesbarkeit 0.1 mg)
Exsikkator

Durchführung der Glühverlustbestimmung

Abweichend von DIN 55 921 werden 0.3 - 1 g der nicht vorgetrockneten Substanz in einen zuvor geglühten Porzellantiegel mit Tiegeldeckel auf 0.1 mg genau eingewogen und 2 Stunden bei 1000 °C in einem Muffelofen geglüht. Ein Verstauben ist sorgfältig zu vermeiden. Als günstig hat es sich erwiesen, wenn die eingewogenen Proben in den noch kalten Muffelofen gestellt werden.
Durch das langsame Aufheizen des Ofens werden stärkere Luftturbulenzen in den Porzellantiegeln vermieden.
Nach Erreichen von 1000 °C wird noch 2 Stunden
weitergeglüht. Anschließend wird mit einem Tiegeldeckel abgedeckt und der Tiegel im Exsikkator über Blaugel der Gewichtsverlust ermittelt.

Auswertung der Glühverlustbestimmung

Da der Glühverlust auf die 2 h bei 105 °C getrocknete Probe bezogen wird, ergibt sich folgende Berechnungsformel:

$$\%\ \text{Glühverlust} = \frac{m_0 x \frac{100-TV}{100} - m_1}{m_0 x \frac{100-TV}{100}} x100$$

$m_0$ = Einwaage (g)
TV = Trocknungsverlust (%)
$m_1$ = Gewicht der geglühten Probe (g)

Das Ergebnis wird mit einer Dezimale ausgewiesen.

Herstellung der erfindungsgemäßen Granulate

Das mittels Aerosol mit Aluminiumoxid dotierte, pyrogen hergestellte Siliziumdioxid wird in vollentsalztem Wasser dispergiert. Dabei wird ein Dispergieraggregat verwendet, das nach dem Rotor/Stator-Prinzip arbeitet. Die entstehenden Dispersionen werden sprühgetrocknet. Die Abscheidung des Fertigproduktes erfolgt über Filter oder Zyklon.

Die Temperung der Sprühgranuläte kann in Muffelöfen erfolgen.

Die Daten zur Herstellung der erfindungsgemäßen Granulate sind in der Tabelle 3 aufgeführt.

Die Daten der erhaltenen Granulate sind in der Tabelle 4 aufgeführt.

Die sprühgetrockneten und eventuell getemperten Granulate werden zur Silanisierung in einem Mischer vorgelegt und unter intensivem Mischen gegebenenfalls zunächst mit Wasser und anschließend mit dem Silanisierungsmittel besprüht. Nachdem das Sprühen beendet ist, wird noch 15 bis 30 min nachgemischt und anschließend 1 bis 4 h bei 100 bis 400 °C getempert.

Das eingesetzte Wasser kann mit einer Säure, zum Beispiel Salzsäure, bis zu einem pH-Wert von 7 bis 1 angesäuert sein. Das eingesetzte Silanisierungsmittel kann in einem Lösungsmittel, wie zum Beispiel Ethanol, gelöst sein.

Tabelle 3:

| Daten zur Sprühtrocknung von wässrigen VP 3375-Dispersionen | | | | | | |
|---|---|---|---|---|---|---|
| Versuchs-bezeichnung | Feststoff-gehalt Oxid/ $H_2O$ [g/l] | Zerstäu-bung mit | Drehzahl Zerstäuber-scheibe [UpM] | Betriebs-temperatur [°C] | Abluft-temperatur [°C] | Sprüh-trockner |
| 1 | 150 | Scheibe | 20000 | 380 | 105 | Niro SD 12.5 |
| 2 | 150 | Scheibe | 10000 | 380 | 105 | Niro SD 12.5 |
| 3 | 150 | Zweistoff -düse | - | 260 | 105 | Anhydro Compakt |
| 4 | 200 | Zweistoff -düse | - | 260 | 105 | Anhydro Compakt |
| 5 | 250 | Zweistoff -düse | - | 260 | 105 | Anhydro Compakt |
| 6 | 300 | Zweistoff -düse | - | 260 | 105 | Anhydro Compakt |
| 7 | 350 | Zweistoff -düse | - | 260 | 105 | Anhydro Compakt |
| 8 | 450 | Zweistoff -düse | - | 260 | 105 | Anhydro Compakt |
| 9 | 600 | Zweistoff -düse | - | 260 | 105 | Anhydro Compakt |
| 10 | 600 | Zweistoff -düse | - | 380 | 110 | Niro SD 12.5 |
| 11 | 600 | Zweistoff -düse | - | 420 | 106 | Niro SD 12.5 |
| 12 | 600 | Scheibe | 20000 | 380 | 107 | Niro SD 12.5 |

Tabelle 4:

| Physikalisch-chemische Daten von sprühgetrockneten Produkten | | | | | | |
|---|---|---|---|---|---|---|
| Versuch-bezeichnung | Stampf-dichte [g/l] | Trocknungs-verlust [%] | Glühverlust [%] | pH-Wert | Spez. Oberfläche (BET) [$m^2/g$] | $d_{50}$-Wert (Cilas) [µm] |
| 1 | 527 | 0,3 | 0,2 | 4,7 | 63 | 18 |
| 2 | 536 | 0,6 | 0,3 | 5,7 | 63 | 24 |
| 3 | 455 | 0,8 | 0,3 | 4,8 | 63 | 19 |
| 4 | 504 | 0,5 | 0,5 | 5,5 | 63 | 21 |
| 5 | 532 | 0,5 | 0,5 | 4,5 | 62 | 26 |
| 6 | 536 | 0,3 | 0,5 | 4,8 | 63 | 22 |
| 7 | 559 | 0,4 | 0,6 | 5,1 | 62 | 25 |
| 8 | 550 | 0,9 | 0,2 | 5,0 | 62 | 23 |
| 9 | 601 | 0,3 | 0,5 | 5,1 | 62 | 21 |
| 10 | 603 | 0,4 | 0,5 | 5,7 | 63 | 18 |
| 11 | 618 | 0,3 | 0,6 | 5,1 | 63 | 24 |
| 12 | 578 | 0,2 | 0,5 | 5,9 | 65 | 23 |

Tabelle 5

| Oberflächenmodifizierung der sprühtrockneten Produkte* | | | | | |
|---|---|---|---|---|---|
| Versuch-bezeichnung | Oberflächen-modifizierungs-mittel (OM) | Teile OM / 100 Teile Oxid | Teile $H_2O$ / 100 Teile Oxid | Tempertemperatur [°C] | Temperdauer [h] |
| 1 | A | 10 | 0 | 370 | 2 |
| 2 | B | 8 | 2 | 120 | 2 |
| 3 | C | 10 | 2 | 140 | 3 |
| 4 | D | 7 | 1 | 140 | 2 |
| 5 | E | 8 | 1 | 140 | 2 |
| 6 | F | 6 | 1 | 130 | 2 |

* Eingesetzt wurde Beispiel 11 aus Tabelle 4
A = Dimethylpolysiloxan
B = 3-Methacryloxypropyltrimethoxysilan
C = Hexamethyldisilazan
D = Hexadecyltrimethoxysilan
E = Octyltrimethoxysilan
F = Aminopropyltriethoxysilan

Tabelle 6:

| Physikalisch-chemische Daten der oberflächenmodifizierten Produkte aus Tabelle 5 | | | | | |
|---|---|---|---|---|---|
| Versuchbezeichnung | Stampfdichte [g/l] | pH-Wert | Trocknungsverlust [%] | Glühverlust [%] | C-Gehalt [%] |
| 1 | 655 | 5,2 | 0,3 | 0,3 | 0,4 |
| 2 | 642 | 6,8 | 0,3 | 4,0 | 2,5 |

Tabelle 6: (fortgesetzt)

| Physikalisch-chemische Daten der oberflächenmodifizierten Produkte aus Tabelle 5 | | | | | |
|---|---|---|---|---|---|
| Versuchbezeichnung | Stampfdichte [g/l] | pH-Wert | Trocknungsverlust [%] | Glühverlust [%] | C-Gehalt [%] |
| 3 | 637 | 7,2 | 0,4 | 1,0 | 0,9 |
| 4 | 645 | 7,5 | 1,0 | 4,3 | 3,9 |
| 5 | 642 | 7,4 | 1,9 | 3,2 | 2,9 |
| 6 | 635 | 10,0 | 0,4 | 3,7 | 0,9 |

**Patentansprüche**

**1.** Granulate auf Basis von mittels Aerosol mit Aluminiumoxid dotiertem, pyrogen hergestelltem Siliziumdioxid mit den folgenden physikalisch-chemischen Kenndaten:

| | |
|---|---|
| Mittlerer Korndurchmesser | 10 bis 150 µm |
| BET-Oberfläche | 25 bis 100 $m^2/g$ |
| pH-Wert | 3 bis 6 |
| Stampfdichte | 400 bis 1.200 g/l |

**2.** Verfahren zur Herstellung der Granulate nach Anspruch 1, **dadurch gekennzeichnet, daß** man mittels Aerosol mit Aluminiumoxid dotiertes, pyrogen hergestelltes Siliziumdioxid in Wasser dispergiert, sprühtrocknet und gegebenenfalls die erhaltenen Granulate bei einer Temperatur von 150 bis 1.100 °C während eines Zeitraumes von 1 bis 8 h tempert.

**3.** Verfahren nach Anspruch 2, **dadurch gekennzeichnet, daß** man als mittels Aerosol mit Aluminiumoxid dotiertes, pyrogen hergestelltes Siliziumdioxid ein Siliziumdioxid einsetzt, bei dem die Basiskomponente ein pyrogen nach der Art der Flammenoxidation oder der Flammenhydrolyse hergestelltes Siliziumdioxid ist, das mit einer Dotierungskomponente von $1 \cdot 10^{-4}$ und bis 20 Gew.-% dotiert wurde, wobei die Dotierungsmenge im Bereich von 1 bis 10.000 ppm liegt und die Dotierungskomponente ein Salz oder eine Salzmischung des Aluminiums oder eine Suspension einer Aluminiumverbindung oder metallischen Aluminiums oder Mischungen davon ist, wobei die BET-Oberfläche des dotierten Oxids zwischen 5 und 600 $m^2/g$ liegt.

**4.** Granulate auf Basis von mittels Aerosol mit Aluminiumoxid dotiertem, pyrogen hergestelltem Siliziumdioxid mit den folgenden physikalisch-chemischen Kenndaten:

| | |
|---|---|
| Mittlerer Korndurchmesser | 10 bis 160 µm |
| BET-Oberfläche | 15 bis 100 $m^2/g$ |
| pH-Wert | 3,0 bis 9,0 |
| Stampfdichte | 400 bis 1.200 g/l |
| Kohlenstoffgehalt | 0,3 bis 12,0 Gew.-% |

**5.** Verfahren zur Herstellung der Granulate nach Anspruch 4, **dadurch gekennzeichnet, daß** man mittels Aerosol mit Aluminiumoxid dotiertes, pyrogen hergestelltes Siliziumdioxid in Wasser dispergiert, sprühtrocknet, gegebenenfalls die erhaltenen Granulate bei einer Temperatur von 150 bis 1.100 °C während eines Zeitraumes von 1 bis 8 h tempert und anschließend silanisiert.

**6.** Verwendung der Granulate gemäß den Ansprüchen 1 und 4 als Katalysator und Katalysatorträger, sowie in Kosmetika, in Sonnenschutzformulierungen, in Silikonkautschuk, in Tonerpulver, in Lacken und Farbe, als Schleif- und Poliermittel, als Rohstoff für Glasund Keramikherstellung.

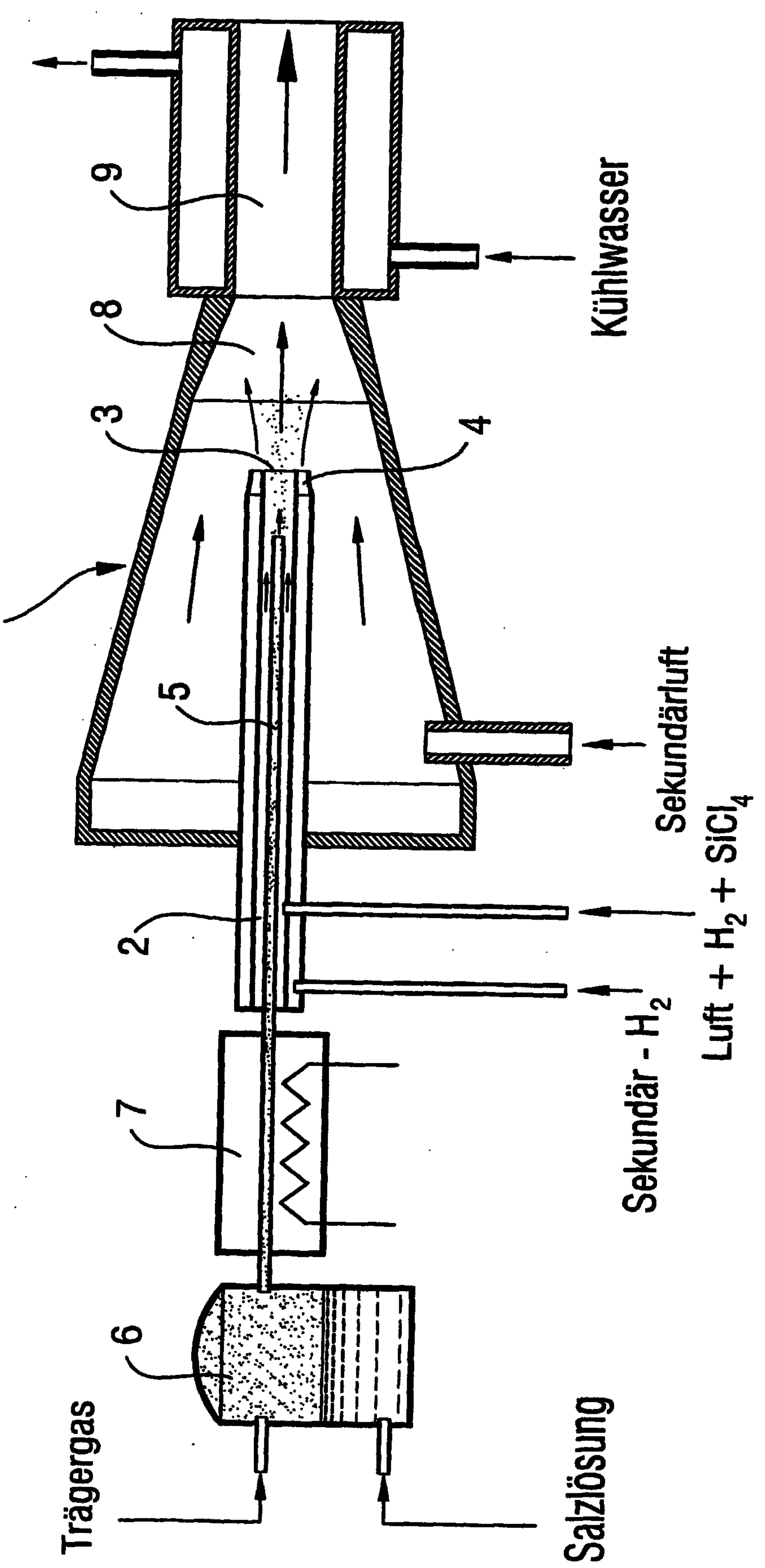
1
2
3
4
5
6
7
8
9
Trägergas
Salzlösung
Sekundär - H2
Luft + H2 + SiCl4
Sekundärluft
Kühlwasser

Fig. 1

Europäisches Patentamt

# EUROPÄISCHER RECHERCHENBERICHT

Nummer der Anmeldung
EP 02 00 6055

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,Y | EP 0 995 718 A (DEGUSSA A. G.) 26. April 2000 (2000-04-26) * das ganze Dokument * | 1-6 | C01B33/12 B01J21/08 B01J35/10 C08K3/36 C09K3/14 C03C3/06 C01B13/20 B01J19/26 B01J12/02 |
| Y | EP 0 725 037 A (DEGUSSA A. G.) 7. August 1996 (1996-08-07) * das ganze Dokument * | 1-6 | |
| | | | RECHERCHIERTE SACHGEBIETE (Int.Cl.7) |
| | | | C01B B01J |

Der vorliegende Recherchenbericht wurde für alle Patentansprüche erstellt

| Recherchenort | Abschlußdatum der Recherche | Prüfer |
|---|---|---|
| DEN HAAG | 27. August 2002 | Rigondaud, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 02 00 6055

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-08-2002

| Im Recherchenbericht angeführtes Patentdokument | Datum der Veröffentlichung | Mitglied(er) der Patentfamilie | Datum der Veröffentlichung |
|---|---|---|---|
| EP 0995718 A | 26-04-2000 | DE 19847161 A1 | 20-04-2000 |
| | | EP 0995718 A1 | 26-04-2000 |
| | | JP 2000169132 A | 20-06-2000 |
| EP 0725037 A | 07-08-1996 | DE 19601415 A1 | 08-08-1996 |
| | | CA 2168677 A1 | 05-08-1996 |
| | | CN 1134399 A ,B | 30-10-1996 |
| | | DE 59606530 D1 | 12-04-2001 |
| | | EP 0725037 A1 | 07-08-1996 |
| | | ES 2154748 T3 | 16-04-2001 |
| | | JP 3095989 B2 | 10-10-2000 |
| | | JP 8253309 A | 01-10-1996 |
| | | KR 190472 B1 | 01-06-1999 |
| | | PT 725037 T | 31-07-2001 |
| | | SG 42921 A1 | 17-10-1997 |
| | | US 5776240 A | 07-07-1998 |

EPO FORM P0461

Für nähere Einzelheiten zu diesem Anhang : siehe Amtsblatt des Europäischen Patentamts, Nr.12/82